# EUROPEAN PATENT SPECIFICATION

(11) **EP 2 783 576 B1**
(45) Date of publication and mention of the grant of the patent: **09.08.2017**
(21) Application number: 13161824.1
(22) Date of filing: 29.03.2013
(51) Int. Cl.: A23L 5/20

(54) **RAPE PROTEIN CONCENTRATE FROM MECHANICALLY DEOILED RAPESEED KERNEL**
Rapsproteinkonzentrat aus mechanisch entölten Rapssamenkerneln
Concentré de protéine de colza à partir d'un noyau de colza mécaniquement déshuilé

(43) Date of publication of application: 01.10.2014
(73) Proprietor: AB "Linas Agro Group", 35143 Panevezys (LT)
(72) Inventor: Zubas, Arunas, Staniunu kaimas Panevezio raj. (LT); Petkevicius, Donatas, Panevezys (LT)
(74) Representative: Zaboliene, Reda

(56) References cited:
- CA-A1- 2 335 745
- CA-A1- 2 351 903
- JP-A- H10 229 828
- US-A- 4 083 836
- US-A- 4 148 789
- US-A1- 2010 234 569

## Description

The present invention relates to rapeseed kernel protein concentrate produced from rape seeds and to method of producing rapeseed protein concentrate RPC with high content of oil from dehulled rapeseed.

### BACKGROUND OF THE INVENTION

Rapeseed protein isolate has been suggested as an alternative to other proteins for human food use due to a balanced amino acid profile and potential functional properties such as emulsifying, foaming, and gelling abilities. Rapeseed seed typically contains over 40% oil. The protein rich meal, which is left behind after the oil has been removed from the seed, is currently used as a protein source in livestock and aquaculture industries. Other than as animal feed, rapeseed meal has been suggested as a potential alternative to plant proteins for human consumption. It has been found to have high biological value and known for its well-balanced amino acid composition. There are also indications that rapeseed proteins have good technologically functional properties. All these suggest that rapeseed meal is a valuable source for the isolation of high-quality protein for utilization in the food processing industry.

Considerable prior work in this area has focused on methods to achieve efficient protein extraction from oilseed-based starting material followed by concentration or isolation of the protein cake into a single high valued product. For example, SE1428076 relates to a method of producing from seeds of Brassica species and of cramble, a protein concentrate which is has a protein content of from 20- to 25% and a fat content of from 10 to 15%.

WO 2008/024840 relates to in part to novel steps in canola and other oil seed processing, including milling to achieve a significant particle size reduction, extraction of higher levels of protein from the starting material, the use of press cake as a starting material, and the production of a precipitated protein concentrates containing a nutritionally significant amount of oil. But this method is more complicated and expensive.

WO2012/135955 relates to aqueous process for the preparation of a protein isolate and a hydrolyzed protein concentrate from an oilseed meal, wherein protein isolates contain less than 2% (w/w) of oil.

WO2010097237 relates to the protein preparation produced from rape seeds having a protein content of less than 90% based on the dry mass. The method for producing a protein preparation includes dehulling the rape seeds and a mechanical deoiling process and/or an extraction process wherein the protein preparation has a fat content which is less than 6%, based on the dry mass.

CA2335745 relates to a process which allows for the production of novel canola oils as well as products suitable as components in organic fertilizers. In the process, raw and undehulled canola seed is subjected to rapid heat treatment in order to deactivate, destroy or reduce the concentration of at least some of the antinutritional components present in the oilseed; dehulled; cold pressed; and then subjected to solvent extraction in order to reduce the lipid content of the resulting meal product which may be used as is or further subjected to additional steps including blending, cooking, pressing, drying and condensing steps.

US2010234569 relates in part to novel steps in canola and other oil seed processing, including milling to achieve a significant particle size reduction, extraction of higher levels of protein from the starting material, the use of presscake as a starting material, and the production of a precipitated protein concentrates containing a nutritionally significant amount of oil.

CA2351903 describes A process for preparation of nutritionally upgraded oilseed meal and high value oilseed oil from oilseed for use in fish or other non-human animal diets or in human foods involving the steps of subjecting the oilseed to heat treatment under conditions selected to substantially deactivate, destroy or reduce the concentration of at least some of the antinutritional components normally present in oilse ed to produce heat-treated seed, dehulling the heat-treated seed to produce a meat fraction and a hull fraction, and cold pressing the meat fraction to yield a n oil suitable for use in the organic human food market and a moisture containing protein and lipid-rich meal having a reduced fibre content.

Comparing this invention with above mentioned inventions, we would like to accent that this invention describes simplified process of production of rape protein concentrate. Due to low fiber content in the RKF deoiling in screw pressing is complicated. In order to increase friction and pressure in screw press, recirculation of press cake and mixing with RKF is preferred before the screw pressing. Recirculation is effected in amount of 5-60% of high protein rapeseed cake. This is the main difference between this invention and above mentioned patent documents.

Accordingly, there is a need for a simple and inexpensive process for producing rapeseed protein concentrate with high oil content.

### SUMMARY OF THE INVENTION

This invention provides a simplified novel process to produce improved rape protein concentrate with high oil content. According to this invention the rape cake protein concentrate is produced by pressing the rapeseed kernel fraction in a screw press and high pro rape cake is produced; extracting high pro cake with ethanol/water solution to remove solvent soluble substances, the rape protein concentrate with high oil content is produced.

### BRIEF DESCRIPTION OF THE DRAWINGS

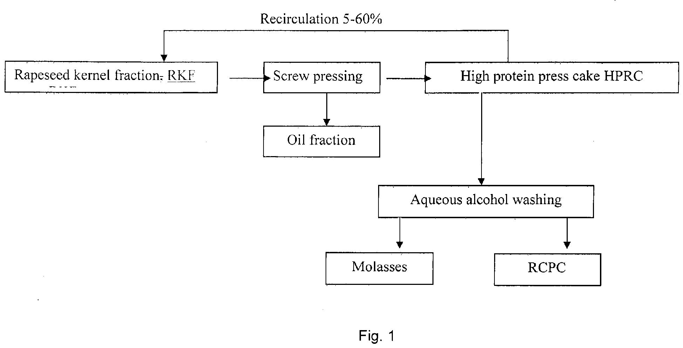

Fig. 1 - shows technological chart for producing rape cake protein concentrate.

### DETAILED DESCRIPTION OF THE PRESENT INVENTION

A method for the producing rape protein concentrate from rapeseed preparation and dehulling rapeseed into rapeseed kernel fraction and rapeseed hull fraction, comprising,
(a) recirculation in amount of 5-60% of high protein press cake (HPRC) and mixing with rapeseed kernel fraction (RKF) in order to increase friction and pressure in screw press;
(b) partially deoiling of rapeseed kernel fraction (RKF) in screw press with or without prior heating and drying;
(c) washing of HPRC with aqueous alcohol solution in order to remove partially sugars, tannins, sinapins, glucosinolates to produce RCPC (rape cake protein concentrate) with oil content of from 5 to 25% (w/w);
(d) drying of RCPC in temperatures in the range of 60-120°C till water content in RCPC is less 10%.

In another embodiment, to increase friction and pressure in the screw press the RKF and rapeseed cake are mixed in mixing ratio from 1:1,5 to 1:0,05, more preferably 1:0,25 using RKF heating.

In a further embodiment, to increase friction and pressure in the screw press the RKF and rapeseed cake are mixed in mixing ratio from 1:1,5 to 1:0,05, more preferably 1:0,15 without heating.

In another embodiment, HPRC has oil content of 7-25% w/w and protein content 35-55% w/w based on dry substance.

In an embodiment, HPRC is treated with aqueous alcohol solution at alcohol concentration 55-85%. Aqueous alcohol solution ratio to HPRC is from 4:1 to 8:1.

In an embodiment rape cake protein concentrate comprises from 5 to 25% (w/w) oil.

When applying this invention production method rapeseed is dehulled by breaking the rapeseed in roll breaker or impact mill followed by air classification and sieving producing two products: rapeseed kernel fraction (RKF) with hull content 1-10% (w/w) and rapeseed hull fraction (RHF).

RKF is partially deoiled in screw press with or without prior heating and drying. Due to low fiber content in the RKF deoiling in screw pressing is complicated. To increase friction and pressure in the screw press, recirculation of press cake and mixing with RKF is preferred before the screw pressing. Recirculation is effected in amount of 5-60% of high protein rapeseed cake. RKF and rapeseed cake mixing ratio from 1:1.5 to 1:0.05, preferred 1:0,25 using RKF heating prior the screw and 1:0.15 without prior heating. During the screw pressing of RKF two fractions are produced: oil fraction and high protein press cake (HPRC).

HPRC has oil content of 7-25% w/w and protein content 35-50% based on dry substance.

HPRC obtained is treated with aqueous alcohol solution at alcohol concentration 55-85%. Aqueous alcohol solution ratio to HPRC is from 4:1 to 8:1. During this process sugars tanins, sinapins, glucosinolates are partially removed resulting concentration protein content to 45-65% in RCPC. Depending on initial oil content in HPRC and chosen aqueous alcohol process parameters oil content in RCPC is 5 to 25% (w/w).

RCPC after aqueous alcohol washing is dried in temperatures ranged 60-120°C. Temperature range depends on estimated product solubility and denaturation, as higher temperatures are used for the drying as lower protein solubility and higher denaturation achieved. RCPC is dried till water content less 7%.

RCPC obtained has a protein content of 45-60% on the dry mass and oil content of 5-25%. The fiber content is at most 12% and a glucosinolate content is less than 1umol/g. A composition of the rape cake protein concentrate is as listed below in Table 1.

**Table 1. Composition of RCPC**

| Parameter | Content % on the dry mass |
|---|---|
| Protein (Nx6.25) | 45-60 |
| Oil | 5-25 |
| Fiber | Max 12 |
| Glucosinolates (umol/g) | <1 |

This description relates to currently preferred embodiments of the invention, and modifications can be made without departing from the scope of the invention.

In order to illustrate and describe the invention, the descriptions of the best implementation options are provided above. This is not an exhaustive or limiting invention aiming to determine an exact form or implementation option. The aforementioned description should be perceived more as an illustration and not as a limitation. It is evident that for professionals of the field there may be obvious many modifications and variations. Implementation options are selected and described in order the specialists of the field to provide the best explanation of the principles of the invention and their best practical application for different implementation options with different modifications suitable for a particular usage or application of implementation. The scope of the invention is specified in its claims and its equivalents where all said terms have meaning at the widest limits unless it is specified otherwise. It must be recognized that in relation to the implementation options, described by professionals of the relevant field, modifications may be made without deviating from the scope of the invention, as it is presented in the following claims.
1. A method for the producing rape protein concentrate from rapeseed preparation and dehulling rapeseed into rapeseed kernel fraction and rapeseed hull fraction, comprising,
   (a) recirculation in amount of 5-60 % of high protein press cake (HPRC) and mixing with rapeseed kernel fraction (RKF) to increase friction and pressure in screw press;
   (b) partially deoiiing of rapeseed kernel fraction (RKF) in screw press with or without prior heating and drying;
   (c) washing of HPRC with aqueous alcohol solution in order to remove partially sugars, tannins, sinapins, glucosinolates to produce RCPC (rape cake protein concentrate) with oil content of from 5 to 25% (w/w) and
   (d) drying of RCPC in temperatures in the range of 60-120°C till water content in RCPC is less 10%.
2. A method for the producing rape protein concentrate of claim 1 wherein to increase friction and pressure in the screw press the RKF and rapeseed cake are mixed in mixing ratio from 1:1,5 to 1:0,05, more preferably 1:0,25 using RKF heating with temperature more 70° C.
3. A method for the producing rape protein concentrate of claim 1 wherein to increase friction and pressure in the screw press the RKF and rapeseed cake are mixed in mixing ratio from 1:1,5 to 1:0,05, more preferably 1:0,15 without heating.
4. A method according to preceding claims wherein HPRC has oil content of 7-25% w/w and protein content 35-55% w/w based on dry substance.
5. A method according to preceding claims wherein ratio of aqueous alcohol solution to HPRC is from 4:1 to 8:1.

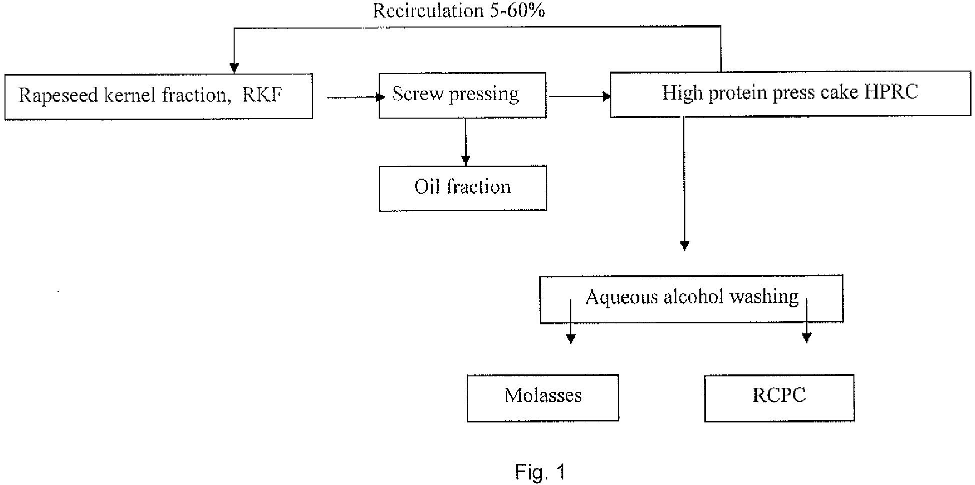

## Claims

1. A method for the producing rape protein concentrate from rapeseed preparation and dehulling rapeseed into rapeseed kernel fraction and rapeseed hull fraction, comprising,
(a) recirculation in amount of 5-60 % of high protein press cake (HPRC) and mixing with rapeseed kernel fraction (RKF) to increase friction and pressure in screw press;
(b) partially deoiling of rapeseed kernel fraction (RKF) in screw press with or without prior heating and drying;
(c) washing of HPRC with aqueous alcohol solution in order to remove partially sugars, tannins, sinapins, glucosinolates to produce RCPC (rape cake protein concentrate) with oil content of from 5 to 25% (w/w) and
(d) drying of RCPC in temperatures in the range of 60-120°C till water content in RCPC is less 10%.

2. A method for the producing rape protein concentrate of claim 1 wherein to increase friction and pressure in the screw press the RKF and rapeseed cake are mixed in mixing ratio from 1:1,5 to 1:0,05, more preferably 1:0,25 using RKF heating with temperature more 70° C.

3. A method for the producing rape protein concentrate of claim 1 wherein to increase friction and pressure in the screw press the RKF and rapeseed cake are mixed in mixing ratio from 1:1,5 to 1:0,05, more preferably 1:0,15 without heating.

4. A method according to preceding claims wherein HPRC has oil content of 7-25% w/w and protein content 35-55% w/w based on dry substance.

5. A method according to preceding claims wherein ratio of aqueous alcohol solution to HPRC is from 4:1 to 8:1.

## Patentansprüche

1. Ein Verfahren zur Herstellung vom Rapsproteinkonzentrat durch Verarbeitung der Rapssamen und Schälung der Rapssamen zu Rapskernfraktion, bestehend aus:
(a) Rückführung von 5-60% des Hochprotein-Presskuchens (HPPK) und Vermischung mit der Rapskernfraktion (RKF), um die Reibung und den Druck in der Schneckenpresse zu erhöhen;
(b) teilweise Entölung der Rapskernfraktion (RKF) in Schneckenpresse mit bzw. ohne Erwärmung und Trocknung;
(c) Waschen des HPPK mit einer wässrigen Alkohollösung, um teilweise Zucker, Gerbstoffe, Sinapine, Glukosinolate zu entfernen und ein RKPK (Rapskuchenproteinkonzentrat) mit Ölgehalt von 5 bis 25% (w/w) zu produzieren; und
(d) Trocknung des RKPK bei Temperaturen im Bereich von 60 bis 120°C, bis das Wassergehalt des RKPK niedriger als 10% wird.

2. Ein Verfahren zur Herstellung vom Rapsproteinkonzentrat nach Anspruch 1, wobei die Reibung und der Druck in der Schneckenpresse erhöht werden und die RKF und der Rapskuchen im Mischungsverhältnis von 1: ,5 bis 1:0,05, bevorzugt 1:0,25, unter Erwärmung der RKF über Temperatur von 70 °C, vermischt werden.

3. Ein Verfahren zur Herstellung vom Rapsproteinkonzentrat nach Anspruch 1, wobei die Reibung und der Druck in der Schneckenpresse erhöht werden und die RKF und der Rapskuchen im Mischungsverhältnis von 1: ,5 bis 1:0,05, bevorzugt 1:0,15, ohne zu erwärmen, vermischt werden.

4. Ein Verfahren nach vorhergehenden Patentansprüchen, wobei das HPPK das Ölgehalt von 7-25% (w/w) und Proteingehalt von 35-55% aufweist (w/w), bezogen auf die Trockensubstanz.

5. Ein Verfahren nach vorhergehenden Patentansprüchen, wobei das Verhältnis der wässrigen Alkohollösung zu HPPK von 4:1 bis 8:1 ist.

## Revendications

1. Une méthode pour la production d'un concentré de protéines de colza à partir d'une préparation de colza et pour le décorticage de colza en fraction de noyau de colza et en fraction de graine de colza, comprenant,
(a) la remise en circulation en une quantité de 5-60% de tourteau riche en protéines (TRP) et le mélange avec la fraction de noyau de colza (FNC) afin d'augmenter la friction et la pression dans la presse à vis ;
(b) le déshuilage partiel de la fraction de noyau de colza (FNC) dans la presse à vis avec ou sans chauffage ou séchage préalable ;
(c) le lavage du TRP avec une solution hydro-alcoolique afin d'enlever partiellement les sucres, tanins, saponines, glucosinolates pour produire le CPTC (concentré de protéines de tourteau de colza) avec une teneur en huile allant de 5 à 25% (de la masse totale) et
(d) le séchage du TRP à des températures allant de 60-120°C jusqu'à ce la teneur en eau dans le TRP soit moins de 10%.

2. Une méthode pour la production d'un concentré de protéines de colza selon la revendication 1 dans laquelle afin d'augmenter la friction et la pression dans la presse à vis la FNC et le tourteau de colza sont mélangés en une proportion de mélange de 1:1,5 à 1:0,05, préférablement 1:0,25 en utilisant le chauffage de FNC avec une température de plus de 70°C.

3. Une méthode pour la production d'un concentré de protéines de colza selon la revendication 1 dans laquelle afin d'augmenter la friction et la pression dans la presse à vis la FNC et le tourteau de colza sont mélangés en une proportion de mélange de 1:1,5 à 1:0,05, préférablement 1:0,15 sans chauffage.

4. Une méthode selon les revendications précédentes dans laquelle le TRP a une teneur en huile de 7-25% de la masse totale et une teneur en protéines de 35-55% de la masse totale sur la base de la substance sèche.

5. Une méthode selon les revendications précédentes dans laquelle la proportion de la solution hydro-alcoolique au TRP est de 4:1 à 8:1.
